# EUROPÄISCHE PATENTSCHRIFT

(11) **EP 3 145 373 B1**
(45) Veröffentlichungstag und Bekanntmachung des Hinweises auf die Patenterteilung: **21.08.2019**
(21) Anmeldenummer: 15724169.6
(22) Anmeldetag: 19.05.2015
(51) Int. Cl.: A47J 31/36, A47J 31/46, A47J 31/56

(54) **KAFFEEMASCHINE FÜR PORTIONSKAPSELN**
COFFEE MACHINE FOR CARTRIDGES
MACHINE À CAFÉ POUR CAPSULES

(30) Priorität: 21.05.2014 EP 14169279
(43) Veröffentlichungstag der Anmeldung: 29.03.2017
(73) Patentinhaber: Tchibo (Schweiz) AG, 8304 Wallisellen (CH)
(72) Erfinder: CONRADY, Tobias, 21073 Hamburg (DE); FOSCAN, Claudio, 8645 Jona (CH)
(74) Vertreter: Frei Patent Attorneys
(86) Internationale Anmeldenummer: PCT/CH2015/000078
(87) Internationale Veröffentlichungsnummer: WO 2015/176191

(56) Entgegenhaltungen:
- EP-A1- 1 510 160
- EP-A1- 1 676 509
- EP-A1- 2 273 117
- US-A1- 2006 096 465

## Beschreibung

Die Erfindung betrifft das Gebiet der Extraktionsgeräte zum Zubereiten von Getränken oder dergleichen aus einem in einer Kapsel enthaltenen Extraktionsgut, beispielsweise gemahlenem Kaffee (Kaffeepulver). Sie betrifft insbesondere eine Kaffeemaschine.

Extraktionsgeräte zum Zubereiten von Getränken oder dergleichen aus einem in einer Portionsverpackung vorhandenen Extraktionsgut sind unter anderem als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet.

Für die Zubereitung diverser Kaffeesorten, insbesondere Espresso, Ristretto oder Espresso lungo (in der Schweiz Cafe Creme) genannt, muss das Wasser unter relativ grossem Druck - der Pumpendruck beträgt oft zwischen 15 und 20 bar - in die Kapsel eingeleitet werden; nur bei genügend hohem Brühdruck bildet sich die bei Kaffeeliebhabern so beliebte 'Crema'.

Es zeigt sich aber beim Brühen, dass bei manchen Kapseln gerade bei fein gemahlenem Kaffeepulver der Fluss - also der Volumenstrom der in die Kapsel fliessenden (und bis auf eine in der Kapsel verbleibende Restmenge auch aus dieser wieder hinausfliessenden) Flüssigkeit- plötzlich stark abfällt und der Benutzer bei vorgegebener Brühzeit so einen unvollständigen Kaffee erhält. Das ist ärgerlich. Zwar wäre es möglich, die Kaffeemaschine so zu steuern, dass der Brühvorgang weitergeführt wird, bis die vorgegebene Flüssigkeitsmenge durchgeflossen ist. Solches führt aber nebst einer höheren Belastung der Pumpe auch zu einem geschmacklich unbefriedigenden Ergebnis.

EP 2 273 117 zeigt ein Verfahren zum Feststellen einer Ablagerung in einer Pumpe, in dem ein gemessener Fluss mit einem vorgegebenen Fluss verglichen wird. US 2006/096465 beschreibt Ansätze zum Anpassen der Flüssigkeitstemperatur in Getränkezubereitungsmaschinen. EP 1 510 160 beschreibt eine sogenannte Kapselmaschine. EP 1 676 509 hat einen Getränkeautomaten zum Inhalt. Es wäre erwünscht, wenn ein Extraktionsgerät so ausgelegt sein könnte, dass es Mittel aufweist, die auch bei unvermeidbaren Schwankungen von Kapseleigenschaften und/oder während des Brühprozesses herrschenden Bedingungen sicherstellen, dass aus einem sehr hohen Prozentsatz der verwendeten Kapseln ein den Qualitätsanforderungen entsprechendes Getränk gebrüht werden kann.

Gemäss einem Aspekt der Erfindung wird ein Extraktionsgerät, insbesondere eine Kaffeemaschine, zur Zubereitung eines Getränks oder dergleichen als Extraktionsprodukt zur Verfügung gestellt. Das Gerät weist ein Brühmodul zum Bilden einer Brühkammer für eine Portionskapsel auf, mit einer Wasserzuführung aufweisend eine Pumpe und im Allgemeinen auch einen Wassererhitzer (Boiler oder Durchlauferhitzer), zum Zuführen von Wasser zur Brühkammer unter Druck. Das Extraktionsgerät besitzt ausserdem eine Steuerung mindestens der Pumpe - diese kann in die Pumpe integriert oder mindestens teilweise pumpenextern vorhanden sein - sowie ein Mittel zum Messen des Flüssigkeitsflusses in die Brühkammer. Gemäss dem Aspekt der Erfindung ist die Steuerung so eingerichtet, dass mindestens unter gewissen Voraussetzungen eine Pumpenleistung der Pumpe abhängig vom Flüssigkeitsfluss ist, und zwar so, dass bei kleinerem Flüssigkeitsfluss die Pumpenleistung im Vergleich zu einem grösseren Flüssigkeitsfluss reduziert wird.

Dieses geschilderte Vorgehen funktioniert unabhängig davon, ob die gesteuerte Grösse der Pumpe (Stellgrösse) die Pumpleistung selbst oder beispielsweise eine Drehzahl oder der Pumpdruck ist. Entscheidend ist bloss, dass die effektiv in die Pumpe fliessende Leistung bei kleinerem Flüssigkeitsfluss reduziert wird, was auch bei einer Steuerung einer solchen anderen Grösse als der Pumpleistung selbst der Fall ist.

Dieses Vorgehen ist kontra-intuitiv. Man würde an sich erwarten, dass man bei einem zu kleinen Flüssigkeitsfluss die Leistung erhöht, um den Flüssigkeitsfluss wieder anzuheben und mindestens in die Nähe eines Sollwerts zu bringen.

Es hat sich jedoch gezeigt, dass sich in Systemen mit Portionskapseln Zustände ergeben können, bei denen ein hoher Druck den Durchflusswiderstand verstärkt. Im Extremfall kommt der Durchfluss dadurch gänzlich zum Erliegen, wenn der maximale Pumpendruck erreicht ist. Bei einer konventionellen Pumpenansteuerung führt dies zu einer Blockade. Das erfindungsgemässe Vorgehen ermöglicht bei solchen Zuständen, dass der Druck in der Brühkammer reduziert wird, was der Blockade entgegenwirkt.

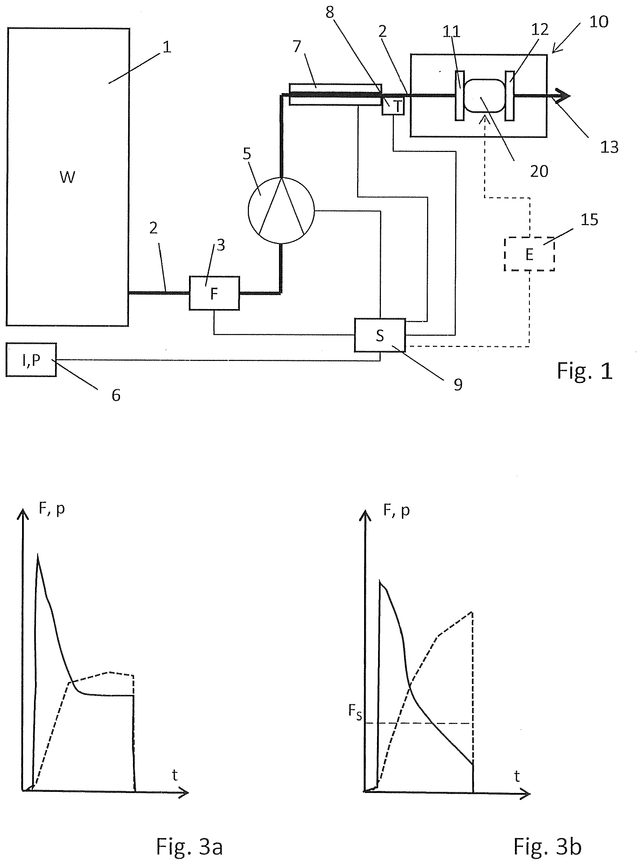

**Figur 3a** zeigt den typischerweise während eines regulären, funktionierenden Brühprozesses gemessenen zeitlichen Verlauf des Drucks im Kapselinnern (gestrichelte Linie) und des Flusses in die Kapsel (ausgezogene Linie). Zu Beginn des Brühprozesses wird die Kapsel mit Wasser gefüllt. Der Fluss ist hoch. Sobald das gewässerte Extraktionsgut Richtung Extraktionsseite geschoben wird und/oder aufquillt, entsteht ein Gegendruck. Der Gegendruck kann in einer Ausführung der Kapsel und einer extraktionsseitigen Perforationsvorrichtung auch dadurch verstärkt werden, dass die Auslauföffnungen der Kapsel beim Einströmvorgang noch nicht geöffnet sind, sondern sich erst durch den aufbauenden Druck vollständig öffnen. Der Fluss und der Druck stellen sich auf ein bestimmtes Niveau ein und bleiben über den Rest der Brühzeit ungefähr konstant. Bei sehr kurzen Brühungen - bspw. für Espressi - kann die Brühung auch beendet sein, bevor sich ein solches konstantes Niveau eingestellt hat. Der Druck, der sich einstellt kann bspw. bei einem erreichbaren Pumpendruck von 19 bar (typische Kaffeemaschinen-Schwingankerpumpe) je nach Kapseleigenschaften bei einem Wert zwischen 5 bar und 16 bar liegen. Der Fluss, der sich nach einer gewissen Zeit einstellt und dann ungefähr konstant bleibt, wird nachstehend auch "Normalfluss" genannt.

**Figur 3b** zeigt die Situation beim Auftreten einer Blockade. Auch in Fig. 3b zeigt die ausgezogene Line den zeitlichen Verlauf des Flusses, die gestrichelte Linie den Verlauf des Drucks. In der Anfangsphase sehen die Parameter gleich aus, die Kapsel wird mit Wasser gefüllt. Im Verlauf der Brühung nimmt der Widerstand in der Kapsel aber stark zu. Der Brühdruck steigt praktisch bis zu einem von der Pumpe erreichbaren Maximaldruck (Pumpendruck), und der Fluss nimmt kontinuierlich ab. Aus Sicherheitsgründen und um eine Überhitzung des Systems zu verhindern, wird gemäss dem Stand der Technik unter einer gewissen Flussgrenze oder nach einer gewissen Zeit die Pumpe ausgeschaltet und die Brühung vorzeitig beendet, auch wenn die gewünschte Extraktionsproduktmenge noch nicht gebrüht ist. Dadurch geht die eingesetzte Kapsel verloren, und für den Benutzer resultiert ein Ärgernis.

Diese beobachteten manchmal auftretenden Probleme mit einem zu starken Rückgang des Flusses können mit einem Zusammenwirken der Funktionsweise einer Portionskapsel einerseits und dem aufquellenden Extraktionsgut (insbesondere Kaffeepulver) andererseits erklärt werden. Insbesondere gilt, dass die Kanäle, durch welche die Flüssigkeit aus der Kapsel abfliesst, knapp dimensioniert sein müssen, damit in der Kapsel der Druck aufrecht erhalten werden kann. Aufgrund der immer auftretenden kleinen Schwankungen der Kapseleigenschaften - beispielsweise des Kaffeepulver-Mahlgrads - kann es vorkommen, dass der Widerstand, den das Extraktionsprodukt beim Abfliessen überwinden muss, etwas höher ist. Dann kann es zu selbstverstärkenden Effekten kommen.

Ein erster solcher möglicher Effekt ist die Bildung eines Kaffeebetts an der extraktionsseitigen Begrenzung der Kapsel durch das Zusammenspiel von heissem Wasser, Druck und Temperatur- bspw. dann, wenn das Extraktionsprodukt vergleichsweise fein gemahlen ist. Ein solches Kaffeebett ist nicht mehr genügend durchlässig für eine reguläre Brühung. Weil bei dann ansteigendem Druck in der Kapsel weiteres Kaffeepulver ins Kaffeebett gepresst wird, sinkt die Flussgeschwindigkeit ab, und der Brühprozess kommt im Extremfall zum Erliegen.

Ein weiterer möglicher, mit dem ersten Effekt zusammenspielender, Effekt hat mit der Bildung von Extraktionsöffnungen in der Portionskapsel zu tun, insbesondere wenn diese aus einem vergleichsweise zähen Material wie bspw. einem Kunststoff (Polypropylen oder dergleichen) gebildet ist, das sich einer Bildung von zu grossen Öffnungen widersetzt.

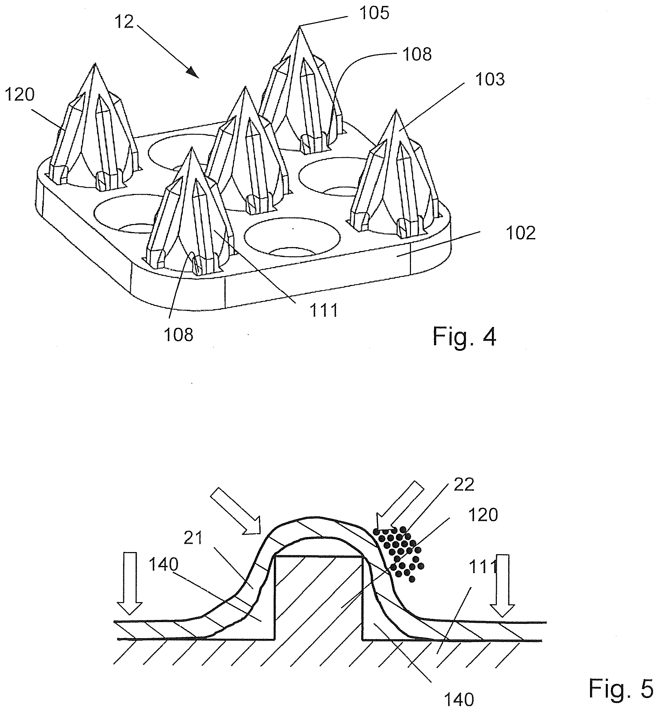

**Figur 4** zeigt zur Illustration ein Beispiel einer extraktionsseitigen Perforationsvorrichtung 12, welche eine Kapsel beim Verschliessen der Brühkammer oder unter Wirkung des ansteigenden Kapselinnendrucks extraktionsseitig auch nach dem Verschliessen, ansticht, wodurch das Extraktionsprodukt ausgeleitet werden kann. Die hier illustrierte Perforationsvorrichtung entspricht derjenigen der europäischen Patentanmeldung 13 185 359.0, auf die hier ausdrücklich Bezug genommen wird. Die Perforationsvorrichtung weist eine Basisplatte 102 und eine Mehrzahl von Extraktionsdornen 103 auf, die von der Basisplatte her ins Innere der Brühkammer ragen. Jeder Extraktionsdorn weist einen hier pyramidenförmigen, auf eine Spitze 105 hin zulaufenden Grundkörper auf. Entlang der Mantelfläche 111 erstrecken sich nach aussen vorstehende, axiale Rippen 120. Beidseitig der Rippen ist in der Basisplatte je eine Durchleitöffnung 108 ausgebildet.

Die Kapselwand wird nach dem Anstechen die Basis (den unteren Teil, bspw. bis ungefähr hin zum Ort, an dem die Rippendicke nach oben hin auszulaufen beginnt) der Extraktionsdorne 103 kragenartig umschliessen und durch den Kapselinnendruck an diese angedrückt werden. Aufgrund des eckigen Querschnitts der Rippen 120 wird dabei entlang von deren Basis ein Kanal frei bleiben, durch welchen das Extraktionsprodukt aus der Kapsel ab, in die Durchleitöffnungen hinein und durch diese wegfliessen kann.

**Figur 5** zeigt eine Querschnittsdarstellung einer der Rippen 120 mit anliegender Kapselwand 21. Das Bezugszeichen 22 bezeichnet sehr schematisch im Kapselinnern vorhandenes Kaffeepulver; in Realität wird im Wesentlichen entlang der ganzen Kapselwand 21 Kaffeepulver vorhanden sein. Der Kapselinnendruck drückt, wie durch die Doppelpfeile schematisch dargestellt, die Kapselwand an den Extraktionsdorn an. Das verringert die Querschnittsgrösse der Kanäle 140 zu den Durchleitöffnungen, insbesondere wenn aufgrund der erhöhten Temperatur durch das Heisswasser die Kapselwand 21 weicher wird. Dieser Effekt kann durch die Einschnürung der Kanäle 140 - und in Abhängigkeit von der Kapselbeschaffenheit - ergänzend oder alternativ für eine Blockade bei zu hohem Druck führen.

Auch Kombinationen dieser beiden Effekte können sich ergeben, insbesondere das Drücken eines Kaffeebetts gegen die Kapselwand 21, welches Drücken seinerseits die Kanäle 140 verkleinert, oder das Bilden eines Kaffeebetts am Eingang der - sich ohnehin aufgrund des Drucks verkleinernden - Kanäle.

Diese Effekte hängen nicht von der spezifischen Ausgestaltung der Extraktionsdorne wie in Fig. 4 gezeichnet ab. Vielmehr ergeben sie sich auch, wenn Kanäle zum Wegleiten der Flüssigkeit beispielsweise in Rinnen entlang der Mantelfläche 111 und/oder durch Öffnungen in der Mantelfläche ins Innere des Extraktionsdorns verlaufen. Dies ist sehr schematisch in **Figuren 6 und 7** dargestellt.

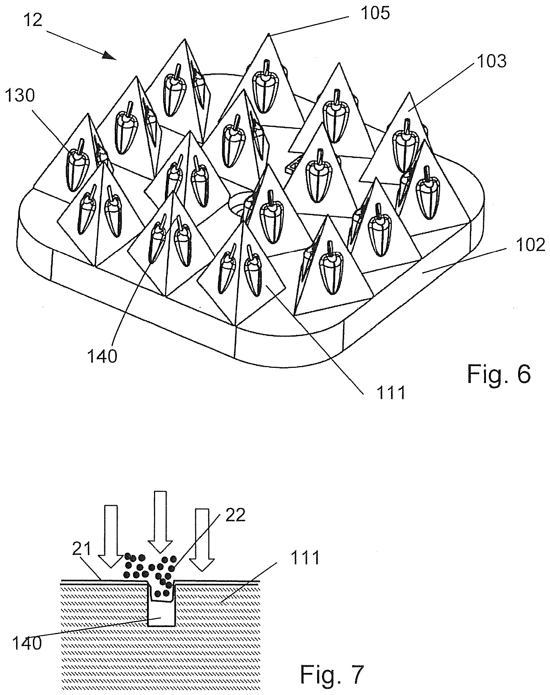

Figur 6 zeigt ein weiteres Beispiel einer extraktionsseitigen Perforationsvorrichtung 12, welche eine Kapsel beim Verschliessen der Brühkammer oder unter Wirkung des ansteigenden Kapselinnendrucks extraktionsseitig auch nach dem Verschliessen, ansticht, wodurch das Extraktionsprodukt ausgeleitet werden kann. Auch diese Perforationsvorrichtung besitzt eine Basisplatte 102 und eine Mehrzahl von Extraktionsdornen 103, die von der Basisplatte her ins Innere der Brühkammer ragen. Jeder Extraktionsdorn weist einen hier pyramidenförmigen, auf eine Spitze 105 hin zulaufenden Grundkörper auf. Entlang der Mantelfläche 111 erstrecken sich Vorsprünge 140. Oberseitig der Vorsprünge sind in den entsprechenden Extraktionsdornen 103 Durchleitöffnungen in Form von kanalartigen Öffnungen 140 in der Mantelfläche ausgebildet.

Auch bei diesen Ausführungsformen kann sich eine Blockade ergeben, die bei höherem Druck durch die Wirkung eines Kaffeebetts, eines Verschliessens der Öffnungen 140 durch den Kapselinnendruck oder durch eine Kombination der Wirkungen eintritt, was in Figur 7 illustriert ist.

Ausserdem kann - ebenfalls bei unterschiedlichsten Ausgestaltungen der Extraktionsdorne - der Kapselinnendruck in Kombination mit Reibung verhindern, dass der Ansatz der durch die Spitze 105 erzeugten Öffnung in der Kapselwand genügend weit zur Basis hin (in Fig. 4 und 6 nach unten) rutscht, um den Ansatz der Kanäle (in Fig. 4 am oberseitigen Ende der Rippen 120, in Fig. 6 am oberseitigen Ende der Öffnungen 140) freizugeben.

Wenn nun gemäss dem Vorgehen der Erfindung als Reaktion auf eine Blockade die Pumpenleistung und als Folge davon der Kapselinnendruck reduziert wird, können sich aufgrund des gesunkenen Drucks die Kanäle 140 vergrössern. Die damit einhergehenden Bewegungen in der Kapsel können auch ein eventuelles Kaffeebett auflockern. Ausserdem kann aufgrund der verringerten Reibung die Kapselwand entlang des jeweiligen Perforationsdorns leichter nach unten rutschen und so den Eingang zu den Kanälen besser freigeben. Die Blockade wird behoben.

Für die Wahl der Abhängigkeit der Stellgrösse (Pumpleistung, Drehzahl, Druck, etc.) vom gemessenen Fluss gibt es verschiedene Möglichkeiten.

Eine erste, einfache Option ist die Reduktion der Leistung beim Unterschreiten eines Fluss-Schwellwerts: die Leistung (oder andere Stellgrösse) wird von einem ersten Wert auf einen zweiten Wert reduziert, sobald der Fluss einen gewissen Schwellwert unterschritten hat - bspw. durch Reduktion um einen von 0 verschiedenen Faktor *K*₀, wobei gilt 0< *K*₀<1. Es kann vorgesehen sein, dass dann die Stellgrösse auf dem zweiten Wert verbleibt, bis der Extraktionsvorgang (Brühvorgang) beendet ist. Auch die Verallgemeinerung auf mehr als einen Schwellwert und die bspw. gestufte Anpassung der Stellgrösse ist möglich.

Eine zweite Option ist das Vorsehen einer stetigen oder auch nicht-stetigen Korrekturfunktion (wobei, wenn die Funktion nicht-stetig ist an Sprungstellen gegebenenfalls ein hysteretisches Verhalten vorgesehen sein kann). Die Leistung (oder andere Stellgrösse) wird dann um einen Korrekturfaktor K korrigiert, wobei K mindestens in einem Intervall eine Funktion des Flusses ist.

Für die zweite Option gibt es eine Reihe von Möglichkeiten. Eine erste, einfache Möglichkeit ist eine Stufenfunktion, eventuell mit Hysterese, damit sich kein rasches Hin-und Herschalten ergeben kann. Ähnlich der zweiten Option wird dann die Stellgrösse auf einen zweiten Wert reduziert, sobald der Fluss einen gewissen Schwellwert unterschritten hat. Im Unterschied zur zweiten Option springt die Stellgrösse jedoch zurück auf den ersten Wert, sobald der Fluss den Schwellwert oder einen etwas über dem Schwellwert liegenden oberen Schwellwert überschritten hat. Auch bei dieser Möglichkeit ist eine Verallgemeinerung auf mehrere Stufen möglich.

Eine zweite Möglichkeit ist bspw. das Vorsehen eines sich in Abhängigkeit vom Fluss stetig, bspw. linear zwischen 1 (sofern der Fluss über einem oberen Schwellwert liegt) und einem zwischen Minimalkorrekturfaktor mF mit 0<mF<1 ändernden Wert, wobei der Korrekturfaktor optional konstant bei mF sein kann, wenn der Fluss unter einem unteren Schwellwert liegt.

Anstelle einer linearen Funktion kann unter einem oberen Schwellwert auch eine andere Funktion gewählt werden, bspw. eine Unterteilung in mehrere Geraden mit unterschiedlichen Steigungen, eine nicht-lineare Funktion etc.

Gemäss einer dritten Möglichkeit kann auch der obere Schwellwert entfallen und die Stellgrösse einer vom Fluss abhängigen, linearen oder nicht-linearen Kennlinie folgen, wobei optional gar vorgesehen sein kann, dass die Pumpenleistung ab einem gewissen, hohen Fluss wieder abnimmt. Dies widerspricht dem Erfindungsgedanken nicht; wesentlich für diesen ist lediglich, dass bei einem Fluss in einem gewissen Bereich die Pumpenleistung so geregelt ist, dass sie abnimmt, wenn der Fluss zurückgeht.

Die Steuerung kann so eingerichtet sein, dass die Pumpenleistung vom Fluss als einziger das Brühverfahren charakterisierenden Messgrösse abhängt (d.h. als einziger während des Brühverfahrens ermittelter Messgrösse, aufgrund derer die Pumpleistung noch während des Brühverfahrens der betreffenden Kapsel adaptiert werden kann). Das schliesst nicht aus, dass beispielsweise verschiedene Brühprogramme vorhanden sein können, und dass das Vorgehen abhängig vom gewählten Brühprogramm sein kann. Beispielsweise kann vorgesehen sein, dass der Benutzer manuell zwischen Brühprogrammen wählen kann, und dass die Pumpleistung bei kleinerem (zu kleinem) Flüssigkeitsdurchsatz nur unter der Voraussetzung reduziert wird, wenn ein bestimmtes Brühprogramm - bspw. "Espresso" oder "Ristretto" gewählt ist, während es bei anderen Brühprogrammen nicht verwendet wird.

Anstelle oder zusätzlich zu einer manuellen Wahl zwischen Brühprogrammen kann auch eine automatische Kapselerkennung vorgesehen sein, und eine Wahl des Brühprogrammes erfolgt in Abhängigkeit von Eigenschaften der erkannten Kapsel. Eine solche Kapselerkennung kann bspw. beinhalten, dass jede Kapsel mit einem geeigneten - bspw. optischen oder magnetischen - Code versehen ist, welcher vom Extraktionsgerät erkannt wird. Insbesondere kann vorgesehen sein, dass das Programm mit einer Reduktion der Pumpleistung bei kleinerem (zu kleinem) Flüssigkeitsdurchsatz dann gewählt wird, wenn die erkannte Kapsel zum Beispiel einen besonders fein gemahlenen Kaffee oder eine grössere Kaffeemenge enthält, oder andere Kaffeeeigenschaften wie z.B. Röstgrad, Röstzeit, Fettgehalt, Feuchte oder Mischung zu erhöhtem Durchflusswiderstand führen.

Die Wasserzuführung kann einen Wassertank aufweisen, von dem eine Wasserleitung via die Pumpe und den Wassererhitzer zum Brühmodul führt. Auch eine Verbindung direkt mit einem Kaltwasseranschluss anstelle eines Wassertanks ist nicht ausgeschlossen.

Die Mittel zum Messen des Flusses können einen Durchflusssensor (ein 'Flowmeter') beinhalten, der in der Wasserleitung angeordnet ist, bspw. vor oder auch nach der Pumpe und vor dem Wassererhitzer. Auch eine Anordnung unmittelbar am Eingang zur Brühkammer ist nicht ausgeschlossen, auch wenn sie mit dem möglichen Nachteil behaftet ist, dass dann der Durchflusssensor in Kontakt mit heissem Wasser kommt.

Alternativ können die Mittel zum Messen des Flusses auch direkt in der Pumpe integriert sein. Beispielsweise kann das Verhältnis zwischen der Leistungsaufnahme und einem anderen Parameter, beispielsweise einer Drehzahl oder Schwingungsfrequenz ein Mass für den Fluss darstellen.

Zwischen Mitteln zum Messen des Flusses und der Brühkammer sollte, sofern diese Mittel nicht direkt am Eingang der Brühkammer angeordnet sind, bevorzugt keine Verzweigung angeordnet sein, über welche ein Anteil der Flüssigkeit abgezweigt wird, der nicht von vornherein bekannt ist, d.h. es sollte bspw. nach dem Durchflusssensor bzw. der Pumpe keinen Bypass an der Brühkammer vorbei für einen Teil der Flüssigkeit geben. Ein eventuell trotzdem vorhandener Bypass sollte so geregelt sein, dass der Fluss in die Brühkammer trotzdem mindestens näherungsweise bestimmbar ist.

Für die Steuerung der Pumpenleistung gibt es verschiedene Möglichkeiten. Bei Wechselstrom-Schwingankerpumpen, wie sie in Geräten für die Getränkezubereitung verbreitet sind, kann beispielsweise eine Leistungssteuerung in Form einer Phasenanschnittsteuerung vorgesehen sein. Auch die Ansteuerung über eine variable Frequenz oder Drehzahl ist möglich. Weitere Arten der Leistungssteuerung sind nicht ausgeschlossen, darunter das Vorsehen einer ansteuerbaren Drossel vor oder nach der Pumpe.

Das Extraktionsgerät kann optional noch mit einer aktiven Temperaturregelung versehen sein. Eine solche kann sinnvoll sein, da der Fluss nicht konstant ist und bspw. bei Verwendung eines Durchlauferhitzers als Wassererhitzer dessen Leistung unter Umständen ebenfalls nicht einfach konstant sein sollte. Eine aktive Temperaturregelung kann bspw. eine Temperaturmessung zwischen Wassererhitzer und Brühkammer oder am Wassererhitzer selbst beinhalten.

Das Brühmodul kann wie an sich bekannt als horizontales Brühmodul ausgebildet sein, bei welchen die Kapsel an einer dafür vorgesehenen Stelle (Einwurföffnung oder dergleichen) eingeworfen wird, worauf die Brühkammer bspw. mittels eines Bedienhebels verschlossen wird, wobei beim erneuten Öffnen der Brühkammer nach dem Brühvorgang die Kapsel selbsttätig aus der Brühkammer entfernt und in einen Kapselbehälter ausgeworfen wird. Der Kapseleinwurf erfolgt dabei von oben, das Verschliessen der Brühkammer ist eine horizontale Relativbewegung zweier Brühmodulteile, das Wasser fliesst im Wesentlichen horizontal, und der Kapselbehälter ist unterhalb der Brühkammer ausgebildet.

Auch andere Brühmodulkonstruktionen, bspw. mit gegeneinander verkippenden Brühmodulteilen, mit einem als Kolben ausgebildeten Brühmodulteil (insbesondere in einer vertikalen Anordnung) etc. sind bekannt und für Extraktionsgeräte gemäss der vorliegenden Erfindung geeignet.

Die Kapsel kann insbesondere eine Kapselwand aus Kunststoff aufweisen. Ein in Frage kommender Kunststoff ist Polypropylen. Die Kapselwanddicke kann zwischen 0.1 und 0.6 mm, insbesondere zwischen 0.2 mm und 0.5 mm oder 0.4 mm betragen. In Ausführungsformen kann sie entsprechend WO 2010/118543, entsprechend der europäischen Patentanmeldung 13 199 514.4 oder gemäss 13 199 517.7 ausgebildet sein.

Ebenfalls Gegenstände der vorliegenden Erfindung sind ein Zubereitungssystem mit einem Extraktionsgerät sowie ein Verfahren zum Betreiben eines Extraktionsgeräts.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen zeigen teilweise einander entsprechende Elemente von Figur zu Figur in unterschiedlichen Massstäben. Es zeigen:
- Figur 1 ein Schema eines Extraktionsgeräts, insbesondere einer Kaffeemaschine;

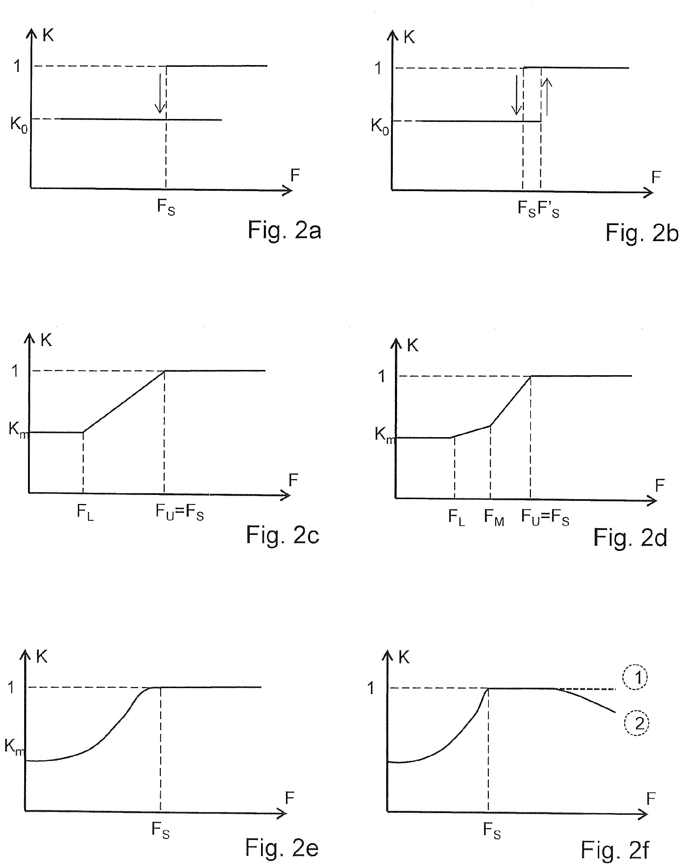

- Fig. 2a-2f Möglichkeiten für Abhängigkeiten eines Stellgrösse-Korrekturfaktors vom gemessenen Fluss;
- Fig. 3a die gemessene Abhängigkeit des Flusses und des Drucks in Abhängigkeit von der Zeit bei einem normal funktionierenden Brühprozess;
- Fig. 3b die gemessene Abhängigkeit des Flusses und des Drucks in Abhängigkeit von der Zeit bei einer Blockade während des Brühprozesses, gemäss dem Stand der Technik;
- Fig. 4 eine extraktionsseitige Perforationsvorrichtung;
- Fig. 5 eine Querschnittsdarstellung eines Details der Perforationsvorrichtung von Fig. 4; und
- Fig. 6 eine andere Perforationsvorrichtung; und
- Fig. 7 eine zu Fig. 5 analoge Querschnittsdarstellung eines Details der Perforationsvorrichtung von Fig. 6.

**Figur 1** zeigt ein Schema eines Extraktionsgeräts, insbesondere einer Kaffeemaschine. Die Wasserzuführung weist einen Wassertank 1 und eine Zuführleitung 2 vom Wassertank zu einem Brühmodul 10 auf. Das Wasser wird durch eine Pumpe 5 gefördert und durchfliesst einen Wassererhitzer - hier als Durchlauferhitzer 7 gezeichnet - bevor es ins Brühmodul einströmt. Vor der Pumpe ist ein Durchflusssensor 3 angeordnet, welcher den Durchfluss des Wassers durch die Zuführleitung und, weil sich die Zuführleitung 2 nicht verzweigt, damit auch den Fluss in das Brühmodul 10 misst.

Die Anordnung des Durchflusssensors vor der Pumpe hat den Vorteil, dass der Durchflusssensor nicht im Bereich angeordnet ist, der unter Druck steht und auch nicht im Heissbereich. Bei geeigneter Auslegung des Durchflusssensors ist jedoch auch eine Anordnung in Durchflussrichtung nach der Pumpe oder gar nach dem Wassererhitzer oder im Wassererhitzer nicht a priori ausgeschlossen. Auch die Integration des Durchflusssensors in die Pumpe ist eine Option. Auf jeden Fall sollte er so angeordnet sein, dass der von ihm gemessene Durchfluss ermöglicht, den Flüssigkeitsfluss in die beim geschlossenen Brühmodul gebildete, die Kapsel 20 umfassende Brühkammer hinein zu ermitteln. Als Flüssigkeitsfluss wird die pro Zeiteinheit fliessende Flüssigkeitsmenge bezeichnet, bspw. als Volumen oder Masse pro Zeiteinheit dargestellt.

Das Brühmodul weist wie an sich bekannt einen Injektor 11 zum Einleiten von Wasser in eine Portionskapsel 20 sowie eine Ausleitvorrichtung 12 (oder Extraktionsvorrichtung) zum Ausleiten der Flüssigkeit aus der Kapsel 20 in einen Ausgiesser 13 auf.

Eine Steuerung 9 steuert die Pumpe 5 und eventuell auch den Wassererhitzer an. Die vom Durchflusssensor 3 gemessenen Durchflusswerte sowie gegebenenfalls die von einem optionalen Temperatursensor 8 ermittelten Temperaturwerte dienen der Steuerung als Eingangsgrössen.

Ein solcher Temperatursensor 8 kann wie gezeichnet in Kontakt mit der Zuführleitung 2 anschliessend an den Wassererhitzer, im Wassererhitzer selbst oder am Wassererhitzer angeordnet sein. Die Steuerung kann so eingerichtet sein, dass sie einen Regelkreis für die Temperatur bildet, indem der Wassererhitzer so angesteuert wird, dass die vom Temperatursensor 8 gemessene Temperatur sich stets in einem gewissen Fenster bewegt. Auch das Hinzuziehen anderer Messwerte, namentlich des gemessenen Flusses, für die Temperaturregelung ist möglich.

Weitere Eingangsgrössen können der Steuerung 9 zugeleitet werden und diese beeinflussen.

Beispielsweise kann das Extraktionsgerät über ein Eingabe- und/oder Programmiermodul 6 verfügen, über welches eine Soll-Flüssigkeitsmenge sowie unter Umständen auch die Temperatur und eventuell auch eine Soll-Pumpleistung beeinflusst werden kann.

Eine weitere Möglichkeit ist das Vorsehen eines Kapselerkennungsmoduls 15, durch welches - bspw. anhand einer geeigneten Codierung der eingeworfenen Portionskapsel - die Kapsel charakterisierende Parameter abgerufen werden können, bspw. eine Information darüber, ob die Kapsel fein gemahlenen oder eher gröber gemahlenen Kaffee enthält.

Weiter ist auch möglich, dass ein Pumpenüberhitzungssensor (in der Figur nicht dargestellt) oder weitere Sensoren oder Eingabemöglichkeiten vorhanden sind.

In Ausführungsformen ist kein Manometer nötig, um Einfluss auf die Pumpleistung zu nehmen, und im Allgemeinen ist ein solches auch gar nicht vorhanden. Einer der Vorteile des erfindungsgemässen Vorgehens ist, dass ein solches - relativ teures und wartungsintensives - Element entfallen kann.

Die Pumpenansteuerung kann direkt oder indirekt von all diesen gemessenen Parametern abhängen. Bevorzugt ist jedoch vorgesehen, dass der gemessene Flüssigkeitsfluss als einzige Messgrösse verwendet wird aufgrund derer die Steuerung die Pumpleistung während des Brühverfahrens adaptiert. Alle anderen Parameter, soweit sie Einfluss auf die Pumpenansteuerung haben, bewirken entweder eine Voreinstellung (bspw. eine Soll-Flüssigkeitsmenge oder ein ,ein/aus' der adaptiven Pumpenansteuerung) oder allenfalls einen Abbruch des Brühverfahrens (bspw. aktiv durch den Benutzer über das Eingabe- und/oder Programmiermodul 6 oder durch einen Pumpenüberhitzungsschutz etc.), bevorzugt nicht aber eine adaptive Ansteuerung der Pumpleistung.

In **Figuren 2a bis 2f** werden noch Möglichkeiten skizziert, wie die Stellgrösse vom gemessenen Fluss abhängig sein kann. In den Figuren ist jeweils ein Korrekturfaktor *K* in Abhängigkeit vom Fluss *F* aufgetragen. Es wird angenommen, dass für die Pumpenleistung *P* gilt: *P*=*P*₀*K*, wobei *P*₀ einer Normal- oder Maximalleistung entspricht. Analog zur Leistung kann auch eine andere die Leistung beeinflussende Stellgrösse (Drehzahl, Frequenz etc.) eingestellt werden.

Gemäss **Fig. 2a** wird der Faktor *K* von 1 auf einen Wert *K*₀ reduziert, sobald der Fluss einen Schwellwert *F_{S}* (siehe auch Fig. 3b) unterschreitet. Nach erfolgter Reduktion bleibt der Faktor auf dem Wert *K*₀, unabhängig von der weiteren Entwicklung des Flusses.

Abweichend von Fig. 2a können auch mehrere Stufen vorgesehen werden, bspw. die Reduktion auf *K*₁ beim Unterschreiten eines oberen Schwellwerts und die Reduktion auf *K*₂< *K*₁ beim Unterschreiten eines unteren Schwellwerts.

**Fig. 2b** zeigt eine Variante, gemäss welcher der Faktor *K* wieder zurück auf 1 gesetzt wird, wenn der Fluss nach einer Reduktion von *K* wieder über den Schwellwert ansteigt. Um ein rasches hin-und-herschalten zu vermeiden, kann wie in Fig. 2b dargestellt eine Hysterese vorgesehen sein, d.h. das Zurücksetzen auf 1 geschieht erst beim Überschreiten eines oberen Schwellwertes *F_{S}'*. Auch diese Ausführungsform kann auf mehrere Stufen verallgemeinert werden.

In den Ausführungsformen der Figuren 2a und 2b ist der Wert *K*₀ kleiner als 1 und grösser als 0 und kann bspw. zwischen 0.3 und 0.8, insbesondere zwischen 0.4 und 0.7, speziell zwischen 0.5 und 0.6 betragen.

**Fig. 2c** zeigt ein Beispiel einer Abhängigkeit von *K* als stetige Funktion von *F*. Der Wert K beträgt 1 über einem oberen Schwellwert *F_{U}* mit einer linearen Reduktion bis zu einem minimalen Korrekturfaktor *Kₘ* bei einem unteren Schwellwert *F_{L}*. Der Wert *Kₘ* kann bspw. zwischen 0.3 und 0.8, insbesondere zwischen 0.4 und 0.7, speziell zwischen 0.5 und 0.6 liegen.

In der Ausführungsform gemäss **Fig. 2d** ergibt sich die Abhängigkeit des Faktors vom Fluss als aus mehreren Geraden mit unterschiedlichen Steigungen zusammengesetzte, abschnittweise lineare und insgesamt stetige Funktion. **Fig. 2e** zeigt die Verallgemeinerung auf eine stetige, nichtlineare Funktion.

In **Fig. 2f** ist eine Abhängigkeit *K*(*F*) gezeichnet, bei welcher die Steigung in einem Bereich negativ wird (ausgezogene Line ganz rechts). Es ist gemäss dieser Variante also möglich, dass die Pumpleistung bei sehr grossen gemessenen Flüssen wieder abnimmt.

Gemäss einer Untervariante kann optional auch vorgesehen sein, dass ganz am Anfang des Brühprozesses, bis erfahrungsgemäss die Kapsel mit Flüssigkeit gefüllt ist, der Korrekturfaktor auch bei grossen Flüssen bei 1 bleibt (gestrichelte Linie, (1)), während er in einer späteren Phase des Brühprozesses bei hohen gemessenen Flüssen reduziert wird (ausgezogene Linie; (2)).

Analog wäre auch nicht ganz ausgeschlossen, dass die Pumpleistung bei sehr kleinen gemessenen Flüssen (ganz links in der Figur) wieder zunimmt.

In allen Ausführungsformen sind die jeweiligen Schwellwerte, insbesondere *F_{S}* auf die jeweiligen Flusswerte im Normalbetrieb, bei Brühung ohne Blockade, abgestimmt. In Ausführungsformen mit Stufen wie in Fig. 2a und 2b kann der Schwellwert bzw. der oberste Schwellwert bspw. zwischen 50% und 85% eines Normalflusses (Normalflusses im Sinne des durchschnittlichen Flusses, der sich nach einer bestimmten Zeit, nachdem die Kapsel mit Wasser gefüllt ist, ergibt) liegen. In Ausführungsformen mit stetigem Verlauf kann der oberste Schwellwert *F_{U}* beispielsweise einem Wert von zwischen 70% und 110 % des Normalflusses liegen, und ein eventueller unterer Schwellwert (Fig. 2c und 2d) zwischen 0 und maximal 70% des oberen Schwellwerts.

Auch Kombinationen der Vorgehensweisen gemäss den Figuren 2a-2f sind denkbar, bspw. eine stufenartige Reduktion beim Unterschreiten eines Schwellwerts kombiniert mit einer linearen oder nichtlinearen Funktion, etc.

## Patentansprüche

1. Extraktionsgerät, insbesondere Kaffeemaschine, zum Zubereiten eines Extraktionsprodukts aus einem in einer Kapsel (20) enthaltenen Extraktionsgut, mit einem Brühmodul (10) zum Bilden einer Brühkammer für die Kapsel, mit einer Wasserzuführung aufweisend eine Pumpe (5) zum Zuführen von Wasser zur Brühkammer unter Druck, sowie eine Steuerung (9) und ein Mittel zum Messen des Flüssigkeitsflusses in die Brühkammer, wobei die Steuerung (9) so eingerichtet und mit der Pumpe verbunden ist, dass sie mindestens unter vordefinierten Voraussetzungen eine Pumpenleistung der Pumpe (5) abhängig vom gemessenen Flüssigkeitsfluss steuert, **gekennzeichnet dadurch, dass** bei einem kleineren Flüssigkeitsfluss die Pumpenleistung im Vergleich zu einem grösseren Flüssigkeitsfluss reduziert wird.

2. Extraktionsgerät nach Anspruch 1, aufweisend einen Wassererhitzer (7) und einen Temperatursensor (8), wobei die Steuerung (9) eingerichtet ist, den Wassererhitzer (7) in Abhängigkeit einer vom Temperatursensor gemessenen Temperatur anzusteuern.

3. Extraktionsgerät nach Anspruch 1 oder 2, wobei die Steuerung so eingerichtet ist, dass sie die Pumpenleistung in Abhängigkeit vom Fluss als einzige das Brühverfahren charakterisierende, während des Brühverfahrens ermittelte Messgrösse steuert.

4. Extraktionsgerät nach einem der vorangehenden Ansprüche, welches frei von einem Manometer ist.

5. Extraktionsgerät nach einem der vorangehenden Ansprüche, wobei das Mittel zum Ermitteln des Flüssigkeitsflusses in die Brühkammer ein an einer Zuführleitung der Wasserzuführung angeordneter Durchflusssensor (3) ist.

6. Extraktionsgerät nach einem der vorangehenden Ansprüche, aufweisend ein Modul (15) zum Erkennen der Kapsel (20), wobei die Steuerung (9) eingerichtet ist, die Pumpenleistung der Pumpe (5) abhängig vom gemessenen Flüssigkeitsfluss gemäss einem Programm zu steuern, welches abhängig von einer Beschaffenheit der erkannten Kapsel ist.

7. Extraktionsgerät nach einem der vorangehenden Ansprüche, wobei die Steuerung eingerichtet ist, die Pumpenleistung um einen von 0 verschiedenen Faktor *K*₀ zu reduzieren, sobald der Flüssigkeitsfluss einen Schwellenwert unterschritten hat.

8. Extraktionsgerät nach einem der vorangehenden Ansprüche, wobei Steuerung eingerichtet ist, die Pumpenleistung beim Unterschreiten eines oberen Schwellwerts um einen Korrekturfaktor *K* anzupassen, der mindestens in einem Intervall eine stetige lineare Funktion des Flüssigkeitsflusses ist.

9. Extraktionsgerät nach Anspruch 8, wobei die Steuerung eingerichtet ist, die Pumpenleistung beim Unterschreiten des oberen Schwellwerts in Abhängigkeit vom Flüssigkeitsfluss zwischen 1 und einem minimalen Korrekturfaktor *Kₘ* bei einem unteren Schwellwert verlaufen zu lassen, wobei der Wert von *Kₘ* zwischen 0.3 und 0.8 beträgt.

10. Extraktionsgerät nach einem der vorangehenden Ansprüche, wobei Steuerung eingerichtet ist, die Pumpenleistung beim Unterschreiten eines oberen Schwellwerts um einen Korrekturfaktor *K* anzupassen, welcher eine stetige nichtlineare Funktion des Flüssigkeitsflusses ist.

11. Zubereitungssystem zum Zubereiten eines Extraktionsprodukts, aufweisend ein Extraktionsgerät nach einem der vorangehenden Ansprüche sowie eine Portionskapsel mit einem Extraktionsgut, wobei die Portionskapsel in ihrer Geometrie auf die Brühkammer abgestimmt ist und eine durchstechbare Kapselwand aufweist.

12. Zubereitungssystem nach Anspruch 11, wobei die Kapselwand aus Kunststoff besteht.

13. Verfahren zum Betreiben eines Extraktionsgeräts, insbesondere nach einem der Ansprüche 1 bis 10, zum Zubereiten eines Extraktionsprodukts aus einem im einer Kapsel (20) enthaltenen Extraktionsgut, mit einem Brühmodul (10) zum Bilden einer Brühkammer für die Kapsel, mit einer Wasserzuführung aufweisend eine Pumpe (5) zum Zuführen von Wasser zur Brühkammer unter Druck, wobei während eines Brühprozesses der Flüssigkeitsfluss in die Brühkammer gemessen und eine Pumpenleistung der Pumpe abhängig vom gemessenen Flüssigkeitsfluss gesteuert wird, **gekennzeichnet dadurch, dass** bei einem kleineren Flüssigkeitsfluss die Pumpenleistung im Vergleich zu einem grösseren Flüssigkeitsfluss reduziert wird.

## Claims

1. An extraction appliance, in particular a coffee machine, for preparing an extraction product from an extraction material contained in a capsule (20), with a brewing module (10) for forming a brewing chamber for the capsule, with a water feed comprising a pump (5) for feeding water under pressure to the brewing chamber, as well as a control (9) and means for measuring the fluid flow into the brewing chamber, wherein the control (9) is configured and connected to the pump, such that at least under predefined conditions, it controls a pump power of the pump (5) in a manner dependent on the measured fluid flow, **characterised in that** given a lower fluid flow, the pump power is reduced in comparison to a greater fluid flow.

2. An extraction appliance according to claim 1, comprising a water heater (7) and a temperature sensor (8), wherein the control (9) is configured to activate the water heater (7) in dependence on a temperature measured by the temperature sensor.

3. An extraction appliance according to claim 1 or 2, wherein the control is configured such that it controls the pump power in dependence on the flow as the sole measured variable which characterises the brewing method and is determined during the brewing procedure.

4. An extraction appliance according to one of the preceding claims, which is free of a manometer.

5. An extraction appliance according to one of the preceding claims, wherein the means for determining the fluid flow into the brewing chamber is a flow sensor (3) which is arranged at a feed conduit of the water feed.

6. An extraction appliance according to one of the preceding claims, comprising a module (15) for recognising the capsule (20), wherein the control (9) is configured to control the pump power of the pump (5) in dependence on the measured fluid flow, according to a program which is dependent on a nature of the recognised capsule.

7. An extraction appliance according to one of the preceding claims, wherein the control is configured to reduce the pump power by a factor *K*₀ which is different to 0, as soon as the fluid flow has fallen short of a threshold value.

8. An extraction appliance according to one of the preceding claims, wherein the control is configured to adapt the pump power by a correction factor *K* on falling short of an upper threshold value, said correction factor being a continuous linear function of the fluid flow, at least in an interval.

9. An extraction appliance according to claim 8, wherein the control is configured to cause the pump power to run, on falling short of the upper threshold value, between 1 and a minimum correction factor *Kₘ* at a lower threshold value, in a manner depending on the fluid flow, wherein the value of *Kₘ* is between 0.3 and 0.8.

10. An extraction appliance according to one of the preceding claims, wherein the control is configured to adapt the pump power by a correction factor *K* on falling short of an upper threshold value, said factor being a continuous, non-linear function of the fluid flow.

11. A preparation system for preparing an extraction product, comprising an extraction appliance according to one of the preceding claims, as well as a portion capsule with an extraction material, wherein the portion capsule with regard to its geometry is matched to the brewing chamber and comprises a capsule wall able to be pierced.

12. A preparation system according to claim 11, wherein the capsule wall consists of plastic.

13. A method for operating an extraction appliance, in particular according to one of the claims 1 to 10, for preparing an extraction product from an extraction material contained in a capsule (20), with a brewing module (10) for forming a brewing chamber for the capsule, with a water feed comprising a pump (5) for feeding water under pressure to the brewing chamber, wherein the fluid flow into the brewing chamber is measured and a pump power of the pump is controlled in a manner depending on the measured fluid flow, during a brewing process, **characterised in that** that given a lower fluid flow, the pump power is reduced in comparison to a greater fluid flow.

## Revendications

1. Appareil d'extraction, en particulier machine à café, pour la préparation d'un produit d'extraction à partir d'un matériau d'extraction repris dans une capsule (20), l'appareil présentant
un module d'infusion (10) qui forme une chambre d'infusion pour la capsule,
une amenée d'eau dotée d'une pompe (5) qui amène sous pression l'eau à la chambre d'infusion et
une commande (9) et un moyen de mesure du débit de liquide dans la chambre d'infusion,
la commande (9) étant conçue et raccordée à la pompe de manière à commander selon des conditions requises définies la puissance de la pompe (5) en fonction du débit de liquide mesuré,
**caractérisé en ce que**
la puissance de la pompe est plus basse lorsque le débit de liquide est plus faible que lorsque le débit de liquide est plus fort.

2. Appareil d'extraction selon la revendication 1, présentant un réchauffeur d'eau (7) et une sonde de température (8), la commande (9) étant conçue pour commander le réchauffeur d'eau (7) en fonction de la température mesurée par la sonde de température.

3. Appareil d'extraction selon les revendications 1 ou 2, dans lequel la commande (9) est conçue pour commander la puissance de la pompe en fonction du débit comme seule grandeur de mesure déterminée pendant l'opération d'infusion pour caractériser l'opération d'infusion.

4. Appareil d'extraction selon l'une des revendications précédentes, dépourvu de manomètre.

5. Appareil d'extraction selon l'une des revendications précédentes, dans lequel le moyen de détermination du débit de liquide dans la chambre d'infusion est une sonde de débit (3) disposée sur un conduit d'amenée d'eau.

6. Appareil d'extraction selon l'une des revendications précédentes, présentant un module (15) de détection de la capsule (20), la commande (9) étant conçue pour commander la puissance de la pompe (5) en fonction du débit de liquide mesuré, selon un programme qui dépend de la nature de la capsule qui a été détectée.

7. Appareil d'extraction selon l'une des revendications précédentes, dans lequel la commande est conçue pour réduire la puissance de la pompe d'un facteur *K₀* différent de 0 dès que le débit de liquide est descendu en dessous d'une valeur de seuil.

8. Appareil d'extraction selon l'une des revendications précédentes, dans lequel la commande est conçue pour adapter la puissance de la pompe d'un facteur *K* lorsqu'une valeur de seuil supérieur n'est pas atteinte, le facteur *K* étant au moins dans un intervalle une fonction linéaire du débit de liquide.

9. Appareil d'extraction selon la revendication 8, dans lequel la commande est conçue pour, lorsque la valeur de seuil supérieur n'est pas atteinte, maintenir la puissance de la pompe à une valeur de seuil inférieur pour un débit de liquide compris entre 1 et un facteur minimum de correction *Kₘ*, la valeur de *Kₘ* étant comprise entre 0,3 et 0,8.

10. Appareil d'extraction selon l'une des revendications précédentes, dans lequel la commande est conçue pour adapter la puissance de la pompe d'un facteur *K* lorsqu'une valeur de seuil supérieur n'est pas atteinte, le facteur *K* étant une fonction non linéaire du débit de liquide.

11. Système de préparation d'un produit d'extraction présentant un appareil d'extraction selon l'une des revendications précédentes ainsi qu'une capsule d'extraction contenant une matière d'extraction, la géométrie de la capsule d'extraction étant accordée à la chambre d'infusion et présentant une paroi apte à être perforée.

12. Système de préparation selon la revendication 11, dans lequel la paroi de la capsule est réalisée en matière synthétique.

13. Procédé d'utilisation d'un appareil d'extraction, en particulier selon l'une des revendications 1 à 10, pour la préparation d'un produit d'extraction à partir d'un matériau d'extraction repris dans une capsule (20), l'appareil présentant
un module d'infusion (10) qui forme une chambre d'infusion pour la capsule,
une amenée d'eau dotée d'une pompe (5) qui amène sous pression l'eau à la chambre d'infusion et
le débit de liquide dans la chambre d'infusion étant mesuré pendant une opération d'infusion et la puissance de la pompe étant commandée en fonction du débit de liquide mesuré,
**caractérisé en ce que**
la puissance de la pompe est plus basse lorsque le débit de liquide est plus faible que lorsque le débit de liquide est plus fort.
